# EUROPÄISCHE PATENTSCHRIFT

(11) **EP 0 786 363 B1**
(45) Veröffentlichungstag und Bekanntmachung des Hinweises auf die Patenterteilung: **29.05.2002**
(21) Anmeldenummer: 97100163.1
(22) Anmeldetag: 08.01.1997
(51) Int. Cl.: B60H 1/00, B60H 1/24

(54) **Luftkanalanordnung zur Fondbelüftung und/oder -Heizung eines Kraftfahrzeuges**
Air duct arrangement for the aeration or heating of the rear passenger compartiment of a vehicle
Configuration des conduits d'air pour l'aération ou le chauffage du fond d'un véhicule automobile

(30) Priorität: 27.01.1996 DE 19602956
(43) Veröffentlichungstag der Anmeldung: 30.07.1997
(73) Patentinhaber: Volkswagen Aktiengesellschaft, 38436 Wolfsburg (DE)
(72) Erfinder: Stoye, Wolfgang, 38518 Gifhorn (DE)

(56) Entgegenhaltungen:
- DE-A- 3 940 361
- US-A- 2 882 809
- US-A- 4 191 242
- US-A- 4 681 153
- US-A- 5 036 891

## Beschreibung

Die Erfindung betrifft eine Luftkanalanordnung zur Fondbelüftung und/oder -heizung eines Kraftfahrzeugs, insbesondere eines Personenkraftwagens.

Heiz- und/oder Klimaanlagen für den Innenraum von Kraftfahrzeugen, die auch im Fondraum Luftauslaßöffnungen aufweisen, sind bekannt.

So beschreibt die EP-0 458 705-A2 eine PKW-Belüftungs- und Heizanlage mit einem Belüftungs- und Heizgerät mit einer Verteilereinrichtung, die jeweils für die Front- und Seitenscheiben, den Fußbereich und den Innenraum getrennte Ausgänge bzw. Anschlüsse hat, wobei für den Fondbereich ein Anschluß für einen Luftkanal vorgesehen ist, der sich im Abstand vom Anschlußbereich in zwei Teilkanäle teilt, von denen jeder eine Fondseite gleichermaßen belüftet oder beheizt.

Bekannt ist desweiteren, daß derartige Anlagen so ausgelegt werden können, daß beide Innenraumseitenhälften bezüglich Temperatur- und Luftdurchsatz getrennt voneinander regelbar sind. Derartige Weiterentwicklungen weisen ein Belüftungs- und/oder Heizgerät mit einem Luftgebläse, einem Steuergerät und einem Bediengerät auf, an das die erforderlichen Luftkanäle für die Frontscheiben-, die Seitenscheiben- und die Fußraumbelüftung und die Belüftung der verschiedenen Innenraumbereiche, jeweils mit entsprechenden Luftauslaßöffnungen, anschließbar sind, und über das das Mischungsverhältnis von Warm- und Kaltluft, aber auch der Luftdurchsatz für die aufgeführten Versorgungsbereiche unterschiedlich und individuell gewählt werden können.

So beschreiben die EP-0 170 177-A1 und die EP-0 210 548-A2 jeweils eine Heiz- und Klimaanlage für den Innenraum von Personenkraftwagen, bei der auch die FondraumFahrerseite und die Fondraum-Beifahrerseite durch getrennt voneinander angeordnete Luftkanäle mit dem Heiz- und Klimagerät verbunden sind. Eine vergleichbare Lösung ist aus der EP-0 059 424-A2 bekannt. Die DE-30 43 548-C2 beschreibt getrennt voneinander regelbare Luftauslaßeinrichtungen, die im Bereich des Armaturenbrettes eines Kraftfahrzeugs angeordnet sind und von denen eine für den Fond vorgesehen ist, an der ein sich gabelförmig zu den beiden Fondseiten hin erstreckender Luftkanal über ein Anschlußstück angeschlosen ist, der beide Fondseiten gleichermaßen belüftet und beheizt.

Die in den aufgeführten Lösungen gezeigten Luftkanäle und deren Anordnung zur individuellen Fondbelüftung und/oder -beheizung der beiden Fondseiten sind bezüglich ihres Erstellungs- und Montageaufwandes relativ aufwendig.

Aufgabe der Erfindung ist es, eine Luftkanalanordnung zur Fondbelüftung- und/ oder - beheizung für ein Kraftfahrzeug, insbesondere einen Personenkraftwagen zu schaffen, mit der die beiden Fondseiten unterschiedlich belüftet- und/ oder beheizt werden können und bei der der Erstellungs- und Montageaufwand reduziert ist.

Diese Aufgabe wird bei einer Luftkanalanordnung nach dem Oberbegriff des Anspruchs 1 und wie aus US-A-4 681 153 bekannt, durch dessen kennzeichnende Merkmale gelöst. Dadurch, daß das Anschlußstück des fondseitig in zwei Fondseitenkanäle geteilten und sich beidseits des Fahrzeugtunnels erstreckenden Luftkanals zur Belüftung bzw. Beheizung der Fondseiten aus belüftungs- und heizgeräteseitigen Lufteintrittsstutzen dieser beiden Fondseitenkanäle gebildet ist, die dazu im Bereich des Einschubes in den Anschlußstutzen eines Belüftungs- und/oder Heizgerätes parallel zueinander ausgerichtet sind und jeweils eine zur gegenseitigen Anlage bringbare Wandung aufweisen, können die beiden Fondseiten unabhängig voneinander und individuell wählbar belüftet und/ oder beheizt werden, da zwei voneinander getrennte Lufteintrittsöffnungen gegeben sind. Außerdem sind der Fertigungs- und auch der Montageaufwand für den Luftkanal reduziert, da dieser aus Kunststoff gefertigt und mit seinen beiden über das Filmscharnier miteinander verbundenen Fondseitenkanälen in einem Arbeitsgang und in einem Werkzeug vorzugsweise durch Blasformung hergestellt werden und als Einheit transportiert und montiert werden kann.

Die Maßnahme nach Anspruch 2 verhindert auf einfache Weise einen Luftdurchtritt zwischen den Lufteintrittsstutzen der beiden Fondseitenkanäle. Die belüftungs- und/oder heizgeräteseitige Fixierung der Luftkanalanordnung erfolgt vorteilhaft durch einen an jedem der beiden Fondseitenkanäle angeordneten Arretierungs- und Fixierbolzen, der mit einem am Fahrzeugtunnel angeordneten Halterungselement in Eingriff bringbar ist. Durch die beiden Bolzen ist zugleich die vorbestimmte gegenseitige Lagezuordnung und Anordnung der Lufteintrittsstutzen im Anschlußstutzen definiert gegeben.

Im Zusammenhang mit der Maßnahme nach Anspruch 4, nach der die beiden Fondseitenkanäle im fondseitigen Endbereich fahrzeugbodenseitig jeweils einen Haltedom mit einem Rastvorsprung für den Eingriff in eine Sitzquerträgerausnehmung aufweisen und der Haltedom ein Festlager für den jeweiligen Fondseitenkanal darstellt, können die Fondseitenkanäle schraubenlos in vorbestimmter Weise am Fahrzeugaufbau befestigt werden. Die Einschubstelle des Anschlußstückes in den Anschlußstutzen kann auf einfache Weise durch einen flexiblen Faltenbalgschlauch oder eine Tülle luftdicht umschlossen werden, so daß die vom Belüftungs- und/oder Heizgerät zur Luftkanalanordnung gesteuerten Luftströme verlustlos in die Fondseitenkanäle einströmen.

Die Fondseitenkanäle können im Bereich des jeweiligen vorderen Fußraumes auf der dem Tunnel abgewandten Seite eine Öffnung aufweisen, die für die Belüftung- und/oder Heizung des betreffenden Fußraumes benutzt werden kann. Beispielsweise ist es in Abhängigkeit von der Fahrzeugkonzeption als Rechts- oder Linkslenker somit möglich, die Öffnung des auf der Beifahrerseite verlaufenden Fondseitenkanals als Belüftungs- und/ oder Heizöffnung zu nutzen und die des jeweils auf der Fahrerseite verlaufenden Fondseitenkanals durch den Fahrzeugteppich bzw. den Dämpfungsbelag abzudecken. Dadurch ist es möglich, auch nur den linken oder rechten vorderen Fahrzeugfußraum zu belüften und/oder zu heizen, indem die Öffnung des jeweils anderen Fondseitenkanals abgedeckt und damit verschlossen wird. Dadurch kann die Luftkanalanordnung ohne zusätzlichen Aufwand gleichermaßen für als Rechts- oder als Linkslenker ausgelegte Fahrzeuge verwendet werden. Soll also beispielsweise nur der Fußraum des Beifahrers belüft- und/oder beheizbar ausgelegt werden, so kann nach Anspruch 7 die Öffnung des jeweils auf der Fahrerseite angeordneten Fondseitenkanals durch den Fahrzeugteppich bzw. den Dämpfungsbelag abgedeckt werden. Die Maßnahme nach Anspruch 8 dient auf einfache Weise einer definierten Luftführung an der Belüftungsöffnung.

Nach Anspruch 9 kann die gemäß Anspruch 8 anordbare Blende auf einfache Weise mit einem Spreizclip am jeweiligen Fondseitenkanal befestigt werden, indem an diesem in der tunnelseitigen Wandung im Bereich der Öffnung ein Loch angeordnet ist, dessen Umrandung in den Kanal hinein ausgestellt ist, in das der an der Blende arretierte Spreizclip gedrückt wird und das Loch hintergreift, und dabei die Blende mit dem Fahrzeugteppich am Fondseitenkanal fixiert.

Die Blende kann nach Anspruch 10 mit verstellbaren Lüftungslamellen versehen sein, so daß der belüftungs- und/oder heizgeräteseitig für den Fondseitenkanal bezüglich Temperatur- und Luftdurchsatz geregelte Luftstrom zusätzlich hinsichtlich seiner Auslaßrichtung verändert werden kann.

Der in die beiden Fondseitenkanäle gabelförmig geteilte Luftkanal für den Fahrzeugfond besteht vorteilhafterweise aus Polypropylen oder Polyethylen, was dessen Fertigung vereinfacht, indem die Arretierungs- und Fixierbolzen nach Anspruch 3, aber auch die Haltedome nach Anspruch 4 bei der Blasformung mit angebracht werden können.

Die Erfindung wird nachstehend anhand eines Ausführungsbeispiels erläutert. In der zugehörigen Zeichnung zeigen:
- Fig. 1:: eine perspektivische Ansicht einer erfindungsgemäßen Luftkanalanordnung,
- Fig. 2:: einen Ausschnitt der Stirnseitenansicht der Luftkanalanordnung,
- Fig. 3:: eine Draufsicht auf das belüftungs- und/ oder heizgeräteseitige Anschlußstück des Luftkanals, teilweise geschnitten,
- Fig. 4:: einen Schnitt durch einen Haltedom quer zur Längsrichtung des in Fahrzeugrichtung linken Fondseitenkanals und
- Fig. 5:: einen Querschnitt durch den in Fahrzeugrichtung rechten Fondseitenkanal im Bereich der Belüftungsöffnung für den Beifahrerfußraum.

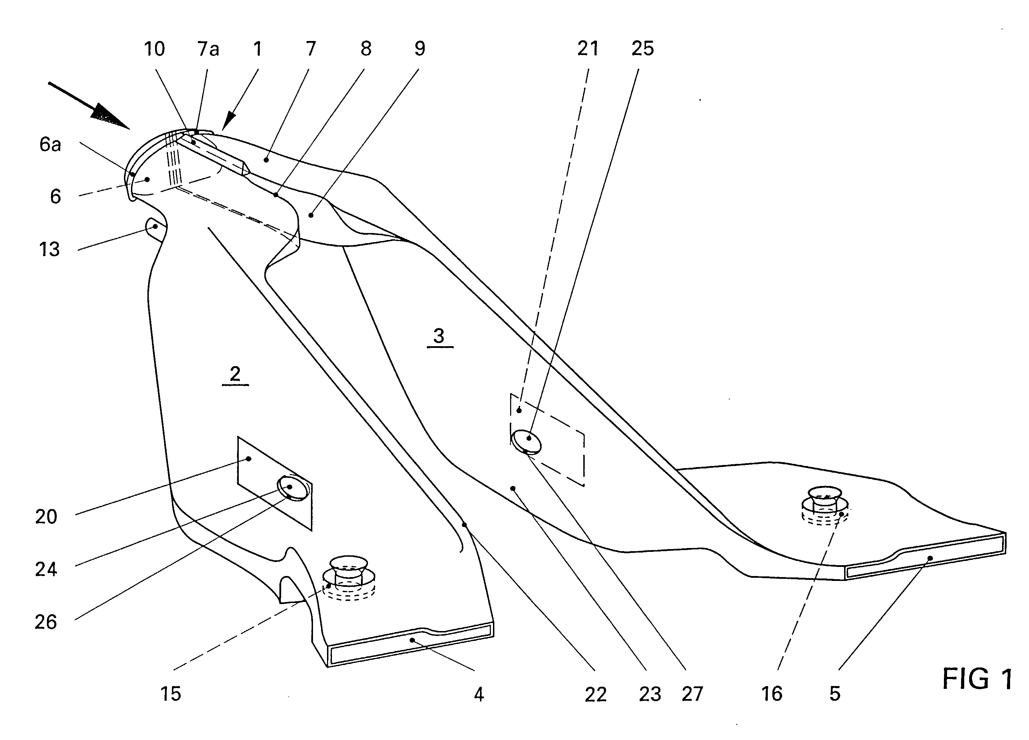

In Fig. 1 ist eine erfindungsgemäße Luftkanalanordnung aus Polypropylen für die Fondbelüftung und/oder -heizung eines Personenkraftwagens dargestellt. Sie weist ein lufteintrittsseitiges Anschlußstück 1 für einen Anschlußstutzen (nicht dargestellt) eines Belüftungs- und/oder Heizgerätes auf, von dem fondseitig zwei sich gabelförmig zu beiden Fondseiten hin ersteckende Fondseitenkanäle 2 und 3 ausgehen. Diese Fondseitenkanäle 2 und 3 sind beidseitig am Fahrzeugtunnel (nicht dargestellt), an diesem anliegend, zu den Fondfußräumen geführt und weisen endseitig eine Luftauslaßöffnung 4 und 5 auf.

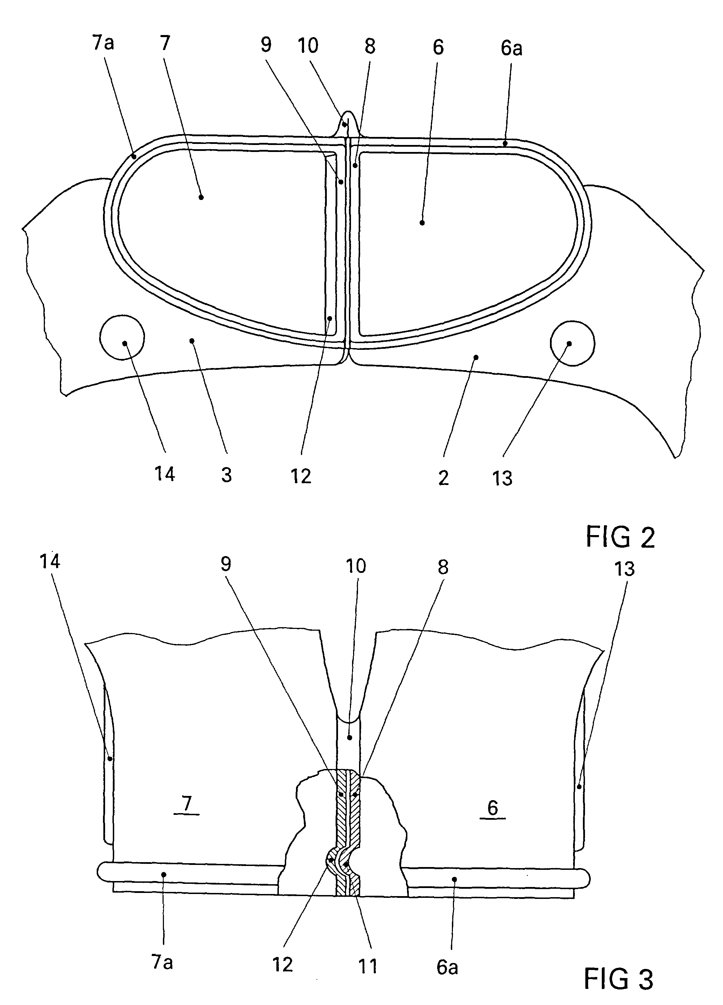

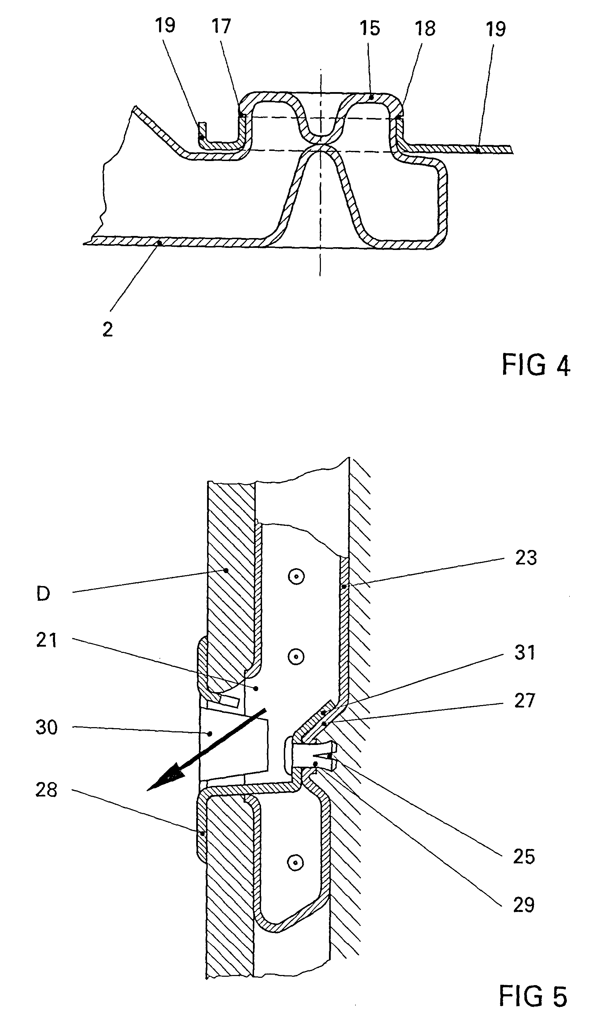

Das Anschlußstück 1 ist aus den belüftungsgeräteseitigen Lufteintrittsstutzen 6 und 7 gebildet. Diese sind parallel zueinander ausgerichtet und weisen jeweils eine zur gegenseifigen Anlage bringbare Wandung 8 und 9 auf, die auf ihrer dem Fahrzeugtunnel abgewandten Seite durch ein Filmscharnier 10 miteinander verbunden sind, dessen Ausdehnung hier nicht ganz an die Stirnkanten der Lufteintrittsstutzen heranreicht. Diese Freimachung ermöglicht die Anformung teilumlaufender Rastwülste 6a und 7a, mit denen ein aufzuschiebender und vorzugsweise am Anschlußstutzen gehaltener Faltenbalg arretiert werden kann. Außderdem wird durch die verbesserte Anlage des Faltenbalgs an den Fondseitenkanälen 2, 3 eine bessere Dichtwirkung erzielt. In den Wandungen 8 und 9 ist jeweils in geringem Abstand von der Lufteintrittsöffnung eine senkrecht zur Längsachse der Lufteintrittsstutzen 6 und 7 und zur rechten Fahrzeugseite hin ausgebildete vorzugsweise sickenartig ausgeführte Auswölbung 11 bzw. 12 zum gegenseitigen Eingriff angeordnet (Fig. 2 und 3). Durch diese fixierende Maßnahme werden die Fondseitenkanäle 2, 3 gegen Axialverschiebungen gesichert. Außerdem wird so eine Labyrinthdichtung erzeugt, die den Luftdurchtritt zwischen den Wandungen 8, 9 nahezu vollständig unterbindet. An beiden Fondseitenkanälen 2 und 3 ist unterhalb ihres Lufteintrittstutzens 6 und 7 in Richtung ihrer Längsachse jeweils ein Arretierungs- und Fixierbolzen 13 und 14 für den Eingriff in ein tunnelfestes Halterungselement (nicht dargestellt) ausgebildet. Beide Fondseitenkanäle 2 und 3 weisen im fondseitigen Endbereich fahrzeugbodenseitig jeweils einen angespritzten Haltedom 15, 16 mit einem Rastvorsprung 17, 18 für den Eingriff in jeweils einen am Fahrzeugaufbau fest angeordneten Sitzquerträger 19 auf, in dem eine entsprechende Ausnehmung vorhanden ist (Fig. 4). In beiden Fondseitenkanälen 2 und 3 sind in der dem jeweils vorderen Fußraum zugewandten Wandung eine Öffnung 20 bzw. 21 und in der dem Tunnel zugewandten Wandung 22 und 23 im Bereich der jeweiligen Öffnung 20, 21 ein Loch 24 bzw. 25 angeordnet, dessen Umrandung 26 bzw. 27 in das Innere des jeweiligen Fondseitenkanals 2 bzw. 3 ausgestellt ist.

Die Montage erfolgt in der Weise, daß die beiden durch das Filmscharnier 10 miteinander verbundenen Lufteintrittstutzen 6, 7 der Fondseitenkanäle 2, 3 mit ihren Wandungen 8, 9 zusammengeführt und anschließend in den (nicht dargestellten) Anschlußstutzen des Belüftungs- und/oder Heizgerätes eingeführt werden, wobei auch die Arretierungs- und Fixierbolzen 13 und 14 in das (nicht dargestellte) tunnelfeste Halterungselement eingreifen. Anschließend werden die fondseitigen Endbereiche der beiden Fondseitenkanäle 2 und 3 am Fahrzeugaufbau fixiert, indem die an diesen angeordneten Haltedome 15 und 16 in den jeweiligen Sitzquerträger 19 gedrückt und dort durch die an den Haltedomen 15, 16 angeordneten Rastvorsprünge 17 und 18 fixiert werden. Damit ist der Luftkanal mit seinen beiden Fondseitenkanälen 2 und 3 schraubenlos, jedoch fest am Fahrzeugaufbau angeordnet.

Anschließend wird ein flexibler Faltenbalgschlauch, der zuvor in Parkstellung auf dem Anschlußstutzen oder dem Anschlußstück angeordnet wurde, über den mit den Rastwülsten 6a und 7a versehenen Einschubbereich geschoben, um diesen luftdicht abzuschließen. Der textile Dämpfungsbelag ist über der Luftkanalanordnung vorzugsweise bereits vor der Montage des Anschlußstutzens verlegt worden.

In der Ausführungsform für einen Personenkraftwagen mit Linkslenkung wird dabei die Öffnung 20 überdeckt, während die Öffnung 21 durch eine entsprechende Ausnehmung im Dämpfungsbelag D zur Fußraumbelüftung und/oder -heizung des Beifahrerfußraumes unabgedeckt bleibt. In dieser Öffnung 21 wird über dem Dämpfungsbelag D eine Blende 28 angeordnet, die mit einem Spreizclip 29 im Loch 25 fixierbar ist, indem dieser die ausgestellte Umrandung 27 des Loches hintergreift. Die im Innern des Fondseitenkanals 3 befindliche Seitenwandung 31 der Blende 28 ist zu dessen tunnelseitiger Wandung 23 hin abgewinkelt, um einen Luftauslaß zu ermöglichen. Überdies weist die Blende 28 an ihrer dem Fußraum zugewandten Seite zwei in den Fondseitenkanal 3 hineinreichende, im Abstand hintereinander angeordnete - ggfs. auch verstellbar ausgeführte - Luftführungslamellen 30 auf, die den austretenden Luftstrom in eine vorbestimmte Austrittrichtung lenken.

## Patentansprüche

1. Luftkanalanordnung zur Fondbelüftung und/oder -heizung mit einem lufteintrittseitigen Anschlußstück (1) für einen Anschlußstutzen eines Belüftungs- und/oder Heizgerätes und zwei fondseitig von dem Anschlußstück (1) ausgehenden und sich gabelförmig beidseits des Fahrzeugtunnels zu beiden Fondseiten hin erstreckenden Fondseitenkanälen (2 und 3) mit jeweils einer endseitigen Luftauslaßöffnung (5), **dadurch gekennzeichnet, daß** das Anschlußstück (1) aus belüftungs- und/oder heizgeräteseitigen Lufteintrittsstutzen (6 und 7) der beiden Fondseitenkanäle (2 und 3) gebildet ist, die im wesentlichen parallel zueinander ausgerichtet sind und jeweils wenigstens eine zur gegenseitigen Anlage bringbare Wandung (8, 9) aufweisen, und daß die Lufteintrittsstutzen (6, 7) auf ihrer dem Fahrzeugtunnel abgewandten Seite entlang der Wandungen (8, 9) durch wenigstens ein Filmscharnier (10) miteinander verbunden sind.

2. Luftkanalanordnung nach Anspruch 1, **dadurch gekennzeichnet, daß** die Wandungen (8) und (9) in geringem Abstand von der jeweiligen Lufteintrittsöffnung jeweils eine im wesentlichen senkrecht zur Längsachse des Lufteintrittsstutzens (6, 7) angeordnete sickenförmige Auswölbung (11, 12) zum gegenseitigen Eingriff aufweisen.

3. Luftkanalanordnung nach Anspruch 1 oder 2, **dadurch gekennzeichnet, daß** die Fondseitenkanäle (2, 3) unterhalb der Lufteintrittsstutzen (6, 7) einen Arretierungs- und Fixierbolzen (13, 14) zum Eingriff in ein tunnelfestes Halterungselement aufweisen.

4. Luftkanalanordnung nach Anspruch 1, 2 oder 3, **dadurch gekennzeichnet, daß** die Fondseitenkanäle (2, 3) im fondseitigen Endbereich fahrzeugbodenseitig jeweils einen Haltedom (15, 16) mit einem Rastvorsprung (17, 18) für den Eingriff in eine Sitzschienenausnehmung aufweisen.

5. Luftkanalanordnung nach Anspruch 1 oder einem der nachfolgenden Ansprüche, **dadurch gekennzeichnet, daß** der Einschubbereich des Anschlußstückes (1) in den Anschlußstutzen von einem flexiblen Faltenbalgschlauch umschlossen ist.

6. Luftkanalanordnung nach Anspruch 1 oder einem der nachfolgenden Ansprüche, **dadurch gekennzeichnet, daß** die Fondseitenkanäle (2, 3) im Bereich des vorderen Fußraumes in ihrer dem Tunnel abgewandten Wandung eine Öffnung (20, 21) aufweisen.

7. Luftkanalanordnung nach Anspruch 6, **dadurch gekennzeichnet, daß** die Öffnung (20, 21) des jeweils auf der Beifahrerseite verlaufenden Fondseitenkanals (2 oder 3) als Belüftungsöffnung nutzbar und die des auf der Fahrerseite verlaufenden Fondseitenkanals (3 oder 2) durch den Dämpfungsbelag (D) abdeckbar ist.

8. Luftkanalanordnung nach Anspruch 6 oder 7, **dadurch gekennzeichnet, daß** die Belüftungsöffnung (20, 21) durch eine Aussparung im Dämpfungsbelag (D) in den Fußraum mündet und mit einer dämfungsseitig einsetzbaren und fixierbaren Blende (28) mit in den Fondseitenkanal (2, 3) reichenden Luftführungslamellen (30) versehen ist.

9. Luftkanalanordnung nach Anspruch 8, **dadurch gekennzeichnet, daß** die Blende (28) mit einem Spreizclip (29) an einem in der tunnelseitigen Wandung (22, 23) des jeweiligen Fondseitenkanals (2, 3) gegenüber der Öffnung (20, 21) angeordneten Loch (24, 25) mit in den Fondseitenkanal (2, 3) weisender Ausstellung der Lochumrandung befestigbar ist.

10. Luftkanalanordnung nach Anspruch 8, **dadurch gekennzeichnet, daß** die Luftführungslamellen (30) verstellbar sind.

11. Luftkanalanordnung nach Anspruch 1 oder einem oder mehreren der nachfolgenden Ansprüche, **dadurch gekennzeichnet, daß** die Fondseitenkanäle (2, 3) aus Propylen oder Polyethylen gefertigt sind.

## Claims

1. Air duct arrangement for rear ventilation and/or heating having an air-inlet connecting piece (1) for a connecting branch of a ventilating and/or heating device, and two rear-side ducts (2 and 3), which emerge in the rear from the connecting piece (1), extend in a forked manner on both sides of the vehicle tunnel to both sides of the rear and each have an air-outlet opening (5) on their end side, **characterized in that** the connecting piece (1) is formed from air-inlet connecting branches (6 and 7) of the two rear-side ducts (2 and 3), which connecting branches come from the ventilating and/or heating device, are aligned essentially parallel to each other and each have at least one wall (8, 9) which can be brought into mutual contact, and **in that** on the side facing away from the vehicle tunnel the air-inlet connecting branches (6, 7) are connected to each other along the walls (8, 9) by at least one film hinge (10).

2. Air duct arrangement according to Claim 1, **characterized in that** the walls (8 and 9) have, for the mutual engagement, a respective bead-shaped convexity (11, 12) arranged essentially perpendicularly with respect to the longitudinal axis of the air-inlet connecting branch (6, 7), at a short distance from the respective air-inlet opening.

3. Air duct arrangement according to Claim 1 or 2, **characterized in that** the rear-side ducts (2, 3) have, below the air-inlet connecting branches (6, 7), a locking and fixing bolt (13, 14) for engagement in a securing element fixed on the tunnel.

4. Air duct arrangement according to Claims 1, 2 or 3, **characterized in that** the rear-side ducts (2, 3) have, on the vehicle floor in the rear end region, a respective retaining dome (15, 16) having a latching projection (17, 18) for engagement in a seat-rail recess.

5. Air duct arrangement according to Claim 1 or one of the following claims, **characterized in that** the region in which the connecting piece (1) is inserted into the connecting branch is surrounded by a flexible bellows-type hose.

6. Air duct arrangement according to Claim 1 or one of the following claims, **characterized in that** the rear-side ducts (2, 3) have, in the region of the front foot well, an opening (20, 21) in their wall facing away from the tunnel.

7. Air duct arrangement according to Claim 6, **characterized in that** the opening (20, 21) in the rear-side duct (2 or 3) extending in each case on the front-passenger's side can be used as a ventilation opening, and the rear-side duct (3 or 2) extending on the driver's side can be covered by the damping covering (D).

8. Air duct arrangement according to Claim 6 or 7, **characterized in that** the ventilation opening (20, 21) opens into the foot well through a cutout in the damping covering (D) and is provided with a cover (28) which can be inserted and fixed on the damping side and has air-guiding fins (30) reaching into the rear-side duct (2, 3).

9. Air duct arrangement according to Claim 8, **characterized in that** the cover 28) can be fastened with an expanding clip (29) on a hole (24, 25) which is arranged opposite the opening (20, 21) in the tunnel-side wall (22, 23) of the respective rear-side duct (2, 3) and has its edge protruding into the rear-side duct (2, 3).

10. Air duct arrangement according to Claim 8, **characterized in that** the air-guiding fins (30) can be adjusted.

11. Air duct arrangement according to Claim 1 or one or more of the following claims, **characterized in that** the rear-side ducts (2, 3) are manufactured from propylene or polyethylene.

## Revendications

1. Configuration des conduits d'air pour l'aération et/ou le chauffage de l'arrière comprenant une pièce de connexion (1) du côté de l'entrée d'air pour une tubulure de connexion d'un appareil d'aération et/ou de chauffage et deux conduits pour les côtés arrière (2 et 3) partant, du côté arrière, depuis la pièce de connexion (1), et s'étendant en forme de fourche de chaque côté du tunnel du véhicule vers les deux côtés arrière, avec à chaque fois une ouverture de sortie d'air (5) du côté de l'extrémité, **caractérisée en ce que** la pièce de connexion (1) est formée par des tubulures d'entrée d'air (6 et 7) des deux conduits pour les côtés arrière (2 et 3) du côté de l'appareil d'aération et/ou de chauffage, qui sont orientées essentiellement parallèlement l'une à l'autre et présentent à chaque fois au moins une paroi (8, 9) pouvant s'appliquer l'une contre l'autre, et **en ce que** les tubulures d'entrée d'air (6, 7) sont connectées l'une à l'autre sur leur côté opposé au tunnel du véhicule le long des parois (8, 9) par au moins une charnière à film (10).

2. Configuration des conduits d'air selon la revendication 1, **caractérisée en ce que** les parois (8) et (9) présentent, à une faible distance de l'ouverture d'entrée d'air respective, à chaque fois une convexité (11, 12) en forme de moulure disposée essentiellement perpendiculairement par rapport à l'axe longitudinal de la tubulure d'entrée d'air (6, 7), en vue d'un engagement mutuel.

3. Configuration des conduits d'air selon la revendication 1 ou 2, **caractérisée en ce que** les conduits pour les côtés arrière (2, 3) présentent, sous les tubulures d'entrée d'air (6, 7), un boulon de blocage et de fixation (13, 14) pour l'engagement dans un élément de fixation fixé au tunnel.

4. Configuration des conduits d'air selon la revendication 1, 2 ou 3, **caractérisée en ce que** les conduits pour les côtés arrière (2, 3) présentent, dans la région de l'extrémité du côté arrière, du côté du fond du véhicule, à chaque fois un dôme de fixation (15, 16) avec une saillie d'encliquetage (17, 18) pour l'engagement dans un logement d'une glissière de siège.

5. Configuration des conduits d'air selon la revendication 1 ou l'une quelconque des revendications subséquentes, **caractérisée en ce que** la région d'enfoncement de la pièce de connexion (1) dans les tubulures de connexion est entourée par un boyau plissé souple.

6. Configuration des conduits d'air selon la revendication 1 ou l'une quelconque des revendications subséquentes, **caractérisée en ce que** les conduits pour les côtés arrière (2, 3) présentent, dans la région de l'espace avant pour les pieds, dans leur paroi opposée au tunnel, une ouverture (20, 21).

7. Configuration des conduits d'air selon la revendication 6, **caractérisée en ce que** l'ouverture (20, 21) du conduit respectif pour le côté arrière (2 ou 3) s'étendant du côté du passager peut être utilisée en tant qu'ouverture d'aération, et celle du conduit pour le côté arrière (3 ou 2) s'étendant du côté du conducteur peut être recouverte par la garniture d'atténuation (D).

8. Configuration des conduits d'air selon la revendication 6 ou 7, **caractérisée en ce que** l'ouverture d'aération (20, 21) débouche à travers un évidement dans la garniture d'atténuation (D) dans l'espace pour les pieds, et est pourvue d'un diaphragme (28) pouvant être inséré et fixé du côté de l'atténuation, avec des lamelles de guidage de l'air (30) atteignant le conduit pour le côté arrière (2, 3).

9. Configuration des conduits d'air selon la revendication 8, **caractérisée en ce que** le diaphragme (28) peut être fixé avec un clip d'écartement (29) dans un trou (24, 25) disposé dans la paroi (22, 23) du côté du tunnel du conduit respectif pour le côté arrière (2, 3) en face de l'ouverture (20, 21), avec une exposition de la périphérie du trou du côté du conduit pour le côté arrière (2, 3).

10. Configuration des conduits d'air selon la revendication 8, **caractérisée en ce que** les lamelles de guidage d'air (30) sont ajustables.

11. Configuration des conduits d'air selon la revendication 1 ou l'une ou plusieurs des revendications subséquentes, **caractérisée en ce que** les conduits pour les côtés arrière (2, 3) sont fabriqués en propylène ou en polyéthylène.
